# EUROPÄISCHE PATENTSCHRIFT

(11) **EP 2 703 772 B1**
(45) Veröffentlichungstag und Bekanntmachung des Hinweises auf die Patenterteilung: **20.05.2015**
(21) Anmeldenummer: 12006111.4
(22) Anmeldetag: 28.08.2012
(51) Int. Cl.: H04N 5/235, G01B 11/00

(54) **Sensor zum Erfassen einer laufenden Warenbahn**
Sensor for detecting a moving strip
Capteur destiné à détecter une bande de marchandise déroulante

(43) Veröffentlichungstag der Anmeldung: 05.03.2014
(73) Patentinhaber: Texmag GmbH Vertriebsgesellschaft, 8800 Thalwil (CH)
(72) Erfinder: Eisen, Jürgen, 86199 Augsburg (DE); Zwerger, Lars, 86163 Augsburg (DE)
(74) Vertreter: Witzany, Manfred

(56) Entgegenhaltungen:
- EP-A1- 2 157 401
- WO-A2-2006/052644
- DE-C1- 4 244 332

## Beschreibung

Die Erfindung betrifft eine Vorrichtung bestehend aus einer laufenden Warenbahn mit einer darauf vorgesehenen Markierung und einem Sensor zum Erfassen der Lage einer laufenden Warenbahn gemäß dem Oberbegriff des Patentanspruchs 1.

Aus der EP 2 157 401 A1 ist eine Vorrichtung zur Abstandsmessung bekannt. Diese besteht aus einer Lichtquelle und einem Lichtdetektor, die über einen Strahlteiler entkoppelt sind. Dabei sendet die Lichtquelle Licht durch den Strahlteiler hindurch auf eine zu untersuchende Probe. Von dieser reflektiertes Licht wird vom Strahlteiler reflektiert und zu einem Detektor geleitet. Durch Erfassung der Zeitverzögerung der am Detektor ankommenden Signale wird der Abstand der Probe von dieser Vorrichtung ermittelt.

Aus der DE 42 44 332 C1 ist ein Verfahren zur Messung der Rauhigkeit von technischen Oberflächen bekannt. Dabei wird auf eine metallische Oberfläche einer zu untersuchenden Probe eine elektro-optisch aktive Flüssigkeit aufgebracht. Diese wird oberseitig von einer ebenen und glatten Elektrode abgedeckt. Zwischen der metallischen Probe einerseits und der oberseitigen Elektrode andererseits wird ein elektrisches Feld erzeugt, welches in Abhängigkeit der dreidimensionalen Struktur der zu untersuchenden Probe inhomogen ist. Die gesamte Anordnung wird optisch abgetastet, so dass ein Bild der dreidimensionalen Oberflächenstruktur der Probe erzeugt wird.

Aus der WO 2006/052644 A2 ist ein Verfahren zur Messung der optischen Drehung von Flüssigkeiten bekannt. Dabei wird die zu untersuchende Flüssigkeit in eine Probenkammer eingefüllt und nach dem Durchlichtverfahren untersucht. Das transmittierte Licht wird anschließend durch ein elektro-optisches Element und durch einen Polarisator geleitet, wonach das Licht von einem Detektor in ein elektrisches Signal umgewandelt und entsprechend ausgewertet wird.

Aus der EP 1 154 225 B1 ist ein gattungsgemäßer Sensor zum Erfassen einer Randkante bzw. einer Markierung einer laufenden Warenbahn bekannt. Dieser Sensor weist eine gerichtete und eine diffuse Lichtquelle auf, die die Warenbahn beleuchten. Das von der Warenbahn reflektierte Licht wird von einem Lichtdetektor erfasst und in ein elektrisches Signal umgewandelt. Dieser Sensor hat sich in der Praxis vielfach bewährt und bildet den Ausgangspunkt der vorliegenden Erfindung.

Der Erfindung liegt die Aufgabe zugrunde, eine Vorrichtung der eingangs genannten Art zu schaffen, der auch unter ungünstigen Bedingungen eine sichere Erfassung der Bahnkante oder einer Markierung der Warenbahn ermöglicht.

Diese Aufgabe wird erfindungsgemäß mit den Merkmalen des Patentanspruchs 1 gelöst.

Eine Vorrichtung gemäß Anspruch 1 dient zum Erfassen einer laufenden Warenbahn, anhand einer auf der Warenbahn vorgesehenen Markierung. Der Sensor weist mindestens eine Lichtquelle auf, welche Emissionslicht gegen die Warenbahn sendet. Es spielt dabei keine Rolle, ob diese mindestens eine Lichtquelle selbst gegen die Warenbahn gerichtet ist oder durch optische Mittel wie beispielsweise Spiegel, Prismen, Linsen oder dergleichen das Emissionslicht derart umgelenkt wird, dass es letzten Endes auf die Warenbahn trifft. Entscheidend ist lediglich, dass wenigstens ein Teilbereich der Warenbahn durch das Emissionslicht beleuchtet wird. Der Sensor weist außerdem mindestens einen Lichtdetektor auf, der Detektionslicht empfängt. Dieses Detektionslicht wird dabei von der mindesten einen Lichtquelle ausgesendet und von der Warenbahn beeinflusst. Als Beeinflussung kommen insbesondere Reflektion, Absorption und Transmission in Betracht. Diese hängen sowohl von den optischen Eigenschaften als auch von der relativen Lage der Warenbahn zum auftreffenden Emissionslicht ab. Damit ist es grundsätzlich möglich, aus dem von der Warenbahn reflektierten oder transmittierten Detektionslicht die Lage der Warenbahn zu erfassen.

In ungünstigen Fällen kann es jedoch vorkommen, dass die Abhängigkeit des Detektionslichts von der Lage der laufenden Warenbahn zu gering ist, um die Lage der Warenbahn aus dem Detektionslicht zu ermitteln. Soll beispielsweise die Lage eines auf der Warenbahn vorgesehenen Metallstreifens erfasst werden, wobei die gesamte Warenbahn mit Klarlack besprüht ist, so ergibt sich zwischen dem Metallstreifen und der übrigen Warenbahn nur ein recht geringer Kontrast, der einer sicheren Erfassung der Lage des Metallstreifens entgegensteht. Um auch unter diesen erschwerten Umständen eine sichere Erfassung der Lage der Warenbahn zu ermöglichen, ist zwischen der mindestens einen Lichtquelle und dem mindestens einen Lichtdetektor mindestens ein Polarisationselement vorgesehen. Das Wort "zwischen" bedeutet in diesem Zusammenhang nicht unbedingt, dass sich das Polarisationselement räumlich zwischen der mindestens einen Lichtquelle und dem mindestens einen Lichtdetektor befinden soll. Es ist vielmehr notwendig, dass sich das Polarisationselement im optischen Sinn zwischen der mindestens einen Lichtquelle und dem mindestens einen Lichtdetektor befindet, also im Strahlengang zwischen beiden vorgesehen ist. Das Polarisationselement kann zwischen der mindestens einen Lichtquelle und der Warenbahn oder zwischen der Warenbahn und dem mindestens einen Lichtdetektor angeordnet sein. Sind mehrere Polarisationselemente vorgesehen, können diese auch zu beiden Seiten der Warenbahn angeordnet sein. Damit wird das mindestens eine Polarisationselement in jedem Fall von Licht durchflutet. Ein das Polarisationselement verlassendes Licht wird im Folgenden als "Transmissionslicht" bezeichnet. Das Polarisationselement ist dabei räumlich zwischen Kondensatorelektroden angeordnet, welche durch Anlegen einer elektrischen Spannung ein elektrisches Feld erzeugen können. Das Polarisationselement ist dabei derart ausgebildet, dass es in Abhängigkeit vom angelegten elektrischen Feld die Polarisation des Transmissionslichtes beeinflussen kann. Damit kann durch entsprechende Wahl der an den Kondensatorelektroden anliegenden elektrischen Spannung der Polarisationszustand des Transmissionslichtes beeinflusst werden. Durch geeignete Wahl des Polarisationszustandes mit Hilfe der angelegten elektrischen Spannung kann auch unter ungünstigen Bedingungen eine Markierung der laufenden Warenbahn sicher abgetastet werden. Insbesondere ist daran gedacht, die an den Kondensatorelektroden anliegende Spannung derart zu variieren, dass ein ausgewähltes Führungskriterium der laufenden Warenbahn einen optimalen Kontrast erzeugt. Es spielt auch keine Rolle, ob das mindestens eine Polarisationselement zwischen der mindestens einen Lichtquelle und der Warenbahn und/oder zwischen der Warenbahn und dem mindestens einen Lichtdetektor angeordnet ist. Entscheidend ist lediglich, dass der Polarisationszustand des Lichtes irgendwo zwischen der mindestens einen Lichtquelle und dem mindestens einen Lichtdetektor beeinflusst wird.

Für das mindestens eine Polarisationselement hat sich gemäß Anspruch 2 mindestens ein Flüssigkristall bewährt. Dieser Flüssigkristall ist zwischen zwei Kondensatorelektroden vorgesehen, die vorzugsweise mit annähernd parallelen Rillen strukturiert sind. Die Rillen beider Kondensatorelektroden sind im Winkel, vorzugsweise von 90°, zueinander ausgerichtet. Ohne äußeres elektrisches Feld ordnen sich die Moleküle des Flüssigkristalls derart an, dass sie zwischen den Kondensatorelektroden eine Helix beschreiben. Diese helixförmige Anordnung führt zu einer Drehung von polarisiertem Licht um den Winkel, den die Rillen in den beiden Kondensatorelektroden einschließen. Legt man nun zwischen den Kondensatorelektroden ein hinreichend starkes elektrisches Feld an, so ordnen sich die Flüssigkristallmoleküle parallel zum elektrischen Feld aus, so dass die Drehung der Polarisationsrichtung des Transmissionslichtes verschwindet. Damit ist es selbst bei sehr kleinen elektrischen Feldern möglich, die Polarisation des Transmissionslichtes zu beeinflussen. Bei einer Reduktion der elektrischen Feldstärke unterhalb eines kritischen Wertes ist die Ausrichtung der Flüssigkristallmoleküle zum elektrischen Feld nicht mehr vollständig, sondern in Form von Domänen organisiert. Innerhalb dieser Domänen wird daher das Transmissionslicht in seiner Polarisationsrichtung nicht beeinflusst, während es außerhalb der Domänen entsprechend gedreht wird. Man erhält daher nach dem Passieren des Flüssigkristalls ein Transmissionslicht, welches teilweise die ursprüngliche Polarisationsrichtung und teilweise eine verdrehte Polarisationsrichtung aufweist. Man kann auf diese Weise unterschiedliche Polarisationsrichtungen mischen, um auf diese Weise den Kontrast im Detektionslicht zu optimieren. Hierzu ist es lediglich erforderlich, die angelegte elektrische Spannung zwischen den Kondensatorelektroden zu variieren.

Alternativ kann das mindestens eine Polarisationselement gemäß Anspruch 3 auch mindestens eine Pockels-Zelle aufweisen. Diese nutzt einen linearen elektro-optischen Effekt aus, durch den sich der Brechungsindex eines Kristalls bei Anlegen eines elektrischen Feldes linear mit dem elektrischen Feld ändert. Als Kristall wird dabei insbesondere ein doppelbrechender Kristall eingesetzt, so dass die Änderung des Brechungsindex zu einer Drehung der Polarisationsebene des Transmissionslichtes führt. Auf diese Weise kann durch Variation der zwischen den Kondensatorelektroden angelegten elektrischen Spannung die Polarisationsebene des Transmissionslichts beliebig eingestellt werden. Dabei können die Kondensatorelektroden transversal oder longitudinal zur Richtung des Transmissionslichts angeordnet sein. Bei der transversalen Anordnung spielen die optischen Eigenschaften der Kondensatorelektroden keine Rolle, da sie nicht vom Licht durchdrungen werden müssen. Damit ist man bei der Wahl der Kondensatorelektroden-Materialien frei. Bei der longitudinalen Anordnung müssen zwangsläufig transparente Kondensatorelektroden eingesetzt werden. Allerdings kann auf diese Weise die erforderliche elektrische Spannung erheblich reduziert werden, indem eine Vielzahl von sehr dünnen, doppelbrechenden Kristallen kaskadiert wird, die jeweils nur eine sehr geringe elektrische Spannung benötigen.

Alternativ ist gemäß Anspruch 4 daran gedacht, dass das mindestens eine Polarisationselement mindestens eine Kerr-Zelle aufweist. Diese nutzt einen in manchen doppelbrechenden Kristallen vorhandenen nicht linearen elektrooptischen Effekt aus, um die Polarisationsrichtung des Transmissionslichtes zu beeinflussen.

Die meisten in Frage kommenden Polarisationselemente bewirken lediglich eine Drehung oder Mischung verschiedener Polarisationszustände des Transmissionslichtes. In diesem Fall ist es notwendig, dem Polarisationselement linear oder zirkular polarisiertes Licht zuzuführen, damit die Änderung des Polarisationszustandes auch tatsächlich einen beobachtbaren Effekt nach sich zieht. Zu diesem Zweck ist es gemäß Anspruch 5 vorteilhaft, wenn zwischen der mindestens einen Lichtquelle und dem mindestens einen Lichtdetektor mindestens ein Polarisationsfilter vorgesehen ist. Auch hier ist wiederum "zwischen" als "im Strahlengang befindlich" zu verstehen. Der mindestens eine Polarisationsfilter kann zwischen der mindestens einen Lichtquelle und der Warenbahn oder zwischen der Warenbahn und dem mindestens einen Lichtdetektor angeordnet sein. Sind mehrere Polarisationsfilter vorgesehen, können diese auch zu beiden Seiten der Warenbahn angeordnet sein. Als Polarisationsfilter kommen beispielsweise Kunststoffschichten mit ausgerichteten Polymerketten in Frage, welche Licht einer bestimmten Polarisationsrichtung absorbieren. Alternativ könnten auch Polarisationseigenschaften an dielektrischen und/oder metallischen Grenzflächen als Polarisationsfilter eingesetzt werden.

Alternativ oder zusätzlich ist es gemäß Anspruch 6 vorteilhaft, wenn die mindestens eine Lichtquelle derart ausgebildet ist, dass das Emissionslicht linear polarisiert ist. Damit ist ein zusätzlicher Polarisationsfilter entbehrlich. Ein Beispiel für eine linear polarisierte Lichtquelle ist ein Gaslaser, der eine Gasküvette mit schräg gestellten Fenstern innerhalb eines Laserresonators aufweist. Ein derartiger Gaslaser kann nur linear polarisiertes Licht abgeben.

Trifft das Emissionslicht oder das Transmissionslicht gemäß Anspruch 7 in einem spitzen Winkel auf eine Normale der Warenbahn auf diese, so ergibt sich insbesondere bei dielektrischen Warenbahnen oder Warenbahnen mit dielektrischen Deckschichten, wie beispielsweise Klarlackschichten, eine starke Abhängigkeit der Lichtreflektion von der Polarisationsrichtung. Damit können schwierige Warenbahnen durch geeignete Wahl der Polarisationsrichtung bzw. einer entsprechenden Mischung aus verschiedenen Polarisationsrichtungen gut abgetastet werden.

Für den spitzen Winkel hat sich gemäß Anspruch 8 der Brewsterwinkel bewährt. Dieser hängt nur vom Brechungsindex des dielektrischen Mediums ab. Trifft Licht genau im Brewsterwinkel auf die Warenbahn auf, so wird Licht mit parallel zur Warenbahn ausgerichteter Polarisationsrichtung nicht reflektiert. Das gesamte reflektierte Licht stammt daher ausschließlich von der senkrecht zur Warenbahn ausgerichteten Polarisation. Nahe dem Brewsterwinkel ist diese Bedingung zwar nicht mehr zu 100% erfüllt, die Reflektion der parallelen Polarisation ist jedoch in diesem Bereich äußerst gering. Damit ist es nicht notwendig, den Brewsterwinkel exakt zu treffen, man erhält vielmehr auch in einem Bereich um den Brewsterwinkel eine sehr starke Polarisationsabhängigkeit der Reflektion. Damit besitzt das Detektionslicht in diesem Bereich des Einfallswinkels eine besonders starke Polarisationsabhängigkeit und kann daher gut vom Polarisationselement beeinflusst werden. Beispielsweise ist es auf diese Weise möglich, die Reflektion des Klarlacks komplett auszuschalten.

Der Erfindungsgegenstand wird beispielhaft anhand der Zeichnung erläutert, ohne den Schutzumfang zu beschränken.

Es zeigt:
- Figur 1: eine schematische Prinzipdarstellung eines Sensors,
- Figur 2: eine erste Ausführungsform eines Polarisationselements und
- Figur 3: eine zweite Ausführungsform eines Polarisationselements.

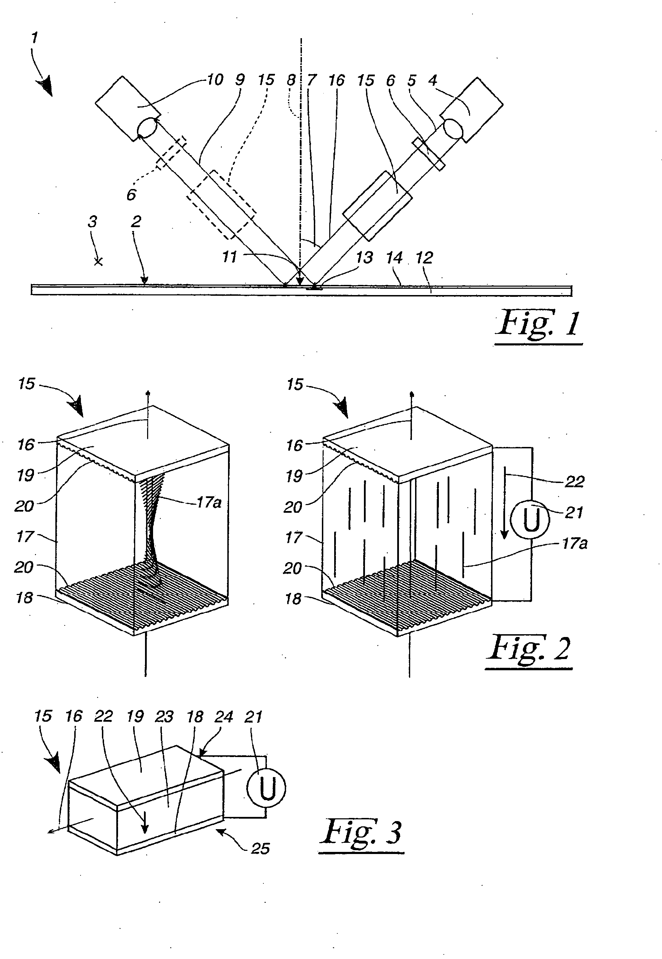

Ein Sensor 1 gemäß Figur 1 dient zum Erfassen einer laufenden Warenbahn 2, die sich entlang einer zum Betrachter gerichteten Laufrichtung 3 bewegt. Der Sensor 1 weist eine Lichtquelle 4 auf, die Emissionslicht 5 aussendet. Der Lichtquelle 4 ist ein Polarisationsfilter 6 nachgeordnet, der das Emissionslicht 5 linear polarisiert. Das auf diese Weise polarisierte Emissionslicht 5 trifft - in einem spitzen Winkel 7 gemessen - zu einer Normalen 8 auf die Warenbahn 2. Ein Teil des auftreffenden Lichtes wird von der Warenbahn 2 reflektiert, wobei die Reflektivität sowohl vom Polarisationszustand des auftreffenden Lichtes als auch von Materialeigenschaften der Warenbahn 2 abhängt. Das reflektierte Detektionslicht 9 gelangt schließlich zu einem Lichtdetektor 10, der beispielsweise als Kamera ausgebildet ist. Damit lässt sich ein Ausschnitt 11 der Warenbahn ortsaufgelöst erfassen. Optional kann vor dem Lichtdetektor 10 noch ein weiterer Polarisationsfilter 6 vorgesehen sein.

Im Ausführungsbeispiel gemäß Figur 1 besteht die Warenbahn 2 beispielhaft aus einem polymeren Träger 12, in den eine Markierung 13 in Form eines Metallstreifens eingelassen ist. Dieser Metallstreifen besteht beispielsweise aus Aluminium, kann jedoch alternativ auch aus jedem anderen Metall gefertigt sein. Diese Markierung 13 soll vom Sensor 1 erkannt werden, damit die Warenbahn 2 nach der Lage der Markierung 13 geführt wird. Dies könnte grundsätzlich durch geeignete Wahl entsprechend einer Hellfeld- oder Dunkelfeldbeleuchtung erzielt werden. Im vorliegenden Ausführungsbeispiel ist die Warenbahn 2 jedoch zusätzlich oberseitig mit einem Klarlack 14 versehen. Dieser Klarlack 14 bildet eine dielektrische Schicht an der Oberfläche der Warenbahn 2, so dass sowohl die Hellfeldbeleuchtung als auch die Dunkelfeldbeleuchtung bei dieser Warenbahnart versagen.

Um dennoch die Lage der Markierung 13 im Lichtdetektor 10 zu erfassen, ist im Strahlengang zwischen dem Polarisationsfilter 6 und der Warenbahn 2 ein Polarisationselement 15 vorgesehen. Dieses Polarisationselement 15 ist in der Lage, die Polarisation des durchtretenden Transmissionslichtes 16 in Abhängigkeit eines angelegten elektrischen Feldes zu beeinflussen. Auf diese Weise kann die Polarisation des Transmissionslichtes 16 derart verstellt werden, dass die Markierung 13 kontrastreich im Lichtdetektor 10 erfassbar ist. Alternativ oder zusätzlich kann das Polarisationselement 15 auch - wie strichliert angedeutet -zwischen der Warenbahn 2 und dem Lichtdetektor 10 angeordnet sein, ohne die Wirkungsweise der Vorrichtung 1 zu beeinträchtigen. Auch der Einsatz von zwei Polarisationselementen 15 beidseits der Warenbahn 2 ist denkbar.

Die Figur 2 zeigt links eine erste Ausführungsform des Polarisationselements 15. Das Polarisationselement 15 weist dabei einen Flüssigkristall 17 auf, der sich beispielsweise in einer nematischen Phase befindet. Der Flüssigkristall 17 ist räumlich zwischen zwei Kondensatorelektroden 18, 19 angeordnet. Diese Kondensatorelektroden 18, 19 weisen jeweils zueinander parallele Rillen 20 auf. Dabei sind die Rillen 20 der Kondensatorelektrode 18 zu den Rillen 20 der Kondensatorelektrode 19 um 90° verdreht. Flüssigkristallmolekühle 17a ordnen sich dabei jeweils parallel zu den jeweiligen Rillen 20 an, so dass sie - in Richtung des Transmissionslichts 16 betrachtet - eine helikale Konfiguration einnehmen. Dies führt dazu, dass die Polarisationsrichtung des Transmissionslichtes 16 um 90° gedreht wird. Der Drehwinkel entspricht dabei dem Winkel, den die Rillen 20 der Kondensatorelektroden 18, 19 miteinander einschließen.

Auf der rechten Seite der Figur 2 ist das Polarisationselement 15 noch einmal dargestellt. Im Unterschied zur linken Darstellung ist dabei aber zwischen den Kondensatorelektroden 18, 19 eine Spannungsquelle 21 angeschlossen. Aufgrund der angelegten Spannung erzeugen die Kondensatorelektroden 18, 19 im Flüssigkristall 17 ein elektrisches Feld 22. Ist das elektrische Feld 22 stark genug, so richten sich die Flüssigkristallmoleküle 17a des Flüssigkristalls 17 parallel zum elektrischen Feld 22 aus. Damit geht die Wirkung des Flüssigkristalls 17 auf die Polarisation des Transmissionslichtes 16 verloren. Dessen Polarisationsrichtung bleibt daher unverändert. Durch Variation der Spannung der Spannungsquelle 21 kann der Anteil der zum elektrischen Feld 22 ausgerichteten Bereiche des Flüssigkristalls 17 variiert werden. Auf diese Weise lassen sich verschiedene Polarisationsrichtungen im Transmissionslicht 16 mischen.

Alternativ kann der Flüssigkristall 17 je nach physikalischen Eigenschaften auch die Polarisation des durchgehenden Lichts durch Anlegen einer Spannung drehen und ohne elektrisches Feld unverändert lassen.

Die Figur 3 zeigt eine alternative Ausführungsform des Polarisationselements 15. Das Polarisationselement 15 weist dabei einen doppelbrechenden Kristall 23 auf, der mit den Kondensatorelektroden 18, 19 versehen ist. Diese Kondensatorelektroden 18, 19 sind wiederum mit der Spannungsquelle 21 verbunden. Der doppelbrechende Kristall 23 wird vom Licht durchstrahlt. Aufgrund des linearen elektrooptischen Effekts ändert sich der Brechungsindex des doppelbrechenden Kristalls 23 linear mit dem von den Kondensatorelektroden 18, 19 erzeugten elektrischen Feld 22. Aufgrund der Doppelbrechung des doppelbrechenden Kristalls 23 führt diese Brechungsindexänderung zu einer Drehung der Polarisationsebene des Transmissionslichts 16. Der Drehwinkel ist dabei proportional zum elektrischen Feld 22 und damit auch proportional zur angelegten, von der Spannungsquelle 21 erzeugten Spannung. Der doppelbrechende Kristall 23 bildet zusammen mit den Kondensatorelektroden 18, 19 eine Pockels-Zelle 24.

Wird alternativ oder zusätzlich ein nicht linearer elektrooptischer Effekt im doppelbrechenden Kristall 23 ausgenutzt, so ergibt die Anordnung aus doppelbrechendem Kristall 23 und den Kondensatorelektroden 18, 19 eine Kerr-Zelle 25.

### Bezugszeichenliste

- 1: Sensor
- 2: Warenbahn
- 3: Laufrichtung
- 4: Lichtquelle
- 5: Emissionslicht
- 6: Polarisationsfilter
- 7: spitzer Winkel
- 8: Normale
- 9: Detektionslicht
- 10: Lichtdetektor
- 11: Ausschnitt
- 12: polymerer Träger
- 13: Markierung
- 14: Klarlack
- 15: Polarisationselement
- 16: Transmissionslicht
- 17: Flüssigkristall
- 17a: Flüssigkristallmolekühl
- 18, 19: Kondensatorelektrode
- 20: Rille
- 21: Spannungsquelle
- 22: elektrisches Feld
- 23: doppelbrechender Kristall
- 24: Pockels-Zelle
- 25: Kerr-Zelle

## Patentansprüche

1. Vorrichtung bestehend aus einer laufenden Warenbahn (2) mit einer darauf vorgesehenen Markierung (13) und einem Sensor zum Erfassen der Lage der laufenden Warenbahn (2) anhand der Markierung, wobei der Sensor (1) mindestens eine Emissionslicht (5) gegen die Warenbahn (2) sendende Lichtquelle (4) und mindestens einen Lichtdetektor (10) aufweist, welcher Detektionslicht (9) empfängt, welches von der mindestens einen Lichtquelle (4) ausgesendet und von der Warenbahn (2) beeinflusst ist, **dadurch gekennzeichnet, dass** zur Optimierung des Kontrasts zwischen der Warenbahn (2) und der Markierung (13) zwischen der mindestens einen Lichtquelle (4) und dem mindestens einen Lichtdetektor (10) mindestens ein Polarisationselement (15) vorgesehen ist, welches von Transmissionslicht (16) durchflutet ist, wobei das mindestens eine Polarisationselement (15) räumlich zwischen Kondensatorelektroden (18, 19) angeordnet ist, welche ein eine Polarisation des Transmissionslichts (16) beeinflussendes elektrisches Feld (22) durch Anlegen einer elektrischen Spannung erzeugen können und der mindestens eine Lichtdetektor (10) als Kamera ausgebildet ist.

2. Vorrichtung nach Anspruch 1, **dadurch gekennzeichnet, dass** das mindestens eine Polarisationselement (15) mindestens einen Flüssigkristall (17) aufweist.

3. Vorrichtung nach Anspruch 1, **dadurch gekennzeichnet, dass** das mindestens eine Polarisationselement (15) mindestens eine Pockels-Zelle (24) aufweist.

4. Vorrichtung nach Anspruch 1, **dadurch gekennzeichnet, dass** das mindestens eine Polarisationselement (15) mindestens eine Kerr-Zelle (25) aufweist.

5. Vorrichtung nach mindestens einem der Ansprüche 1 bis 4, **dadurch gekennzeichnet, dass** zwischen der mindestens einen Lichtquelle (4) und dem mindestens einen Lichtdetektor (10) mindestens ein Polarisationsfilter (6) vorgesehen ist.

6. Vorrichtung nach mindestens einem der Ansprüche 1 bis 5, **dadurch gekennzeichnet**, das die mindestens eine Lichtquelle (4) derart ausgebildet ist, dass das Emissionslicht (5) linear polarisiert ist.

7. Vorrichtung nach mindestens einem der Ansprüche 1 bis 6, **dadurch gekennzeichnet, dass** das Emissionslicht (5) oder das Transmissionslicht (16) in einem spitzen Winkel (7) auf eine Normale (8) der Warenbahn (2) auf diese auftrifft.

8. Vorrichtung nach Anspruch 7, **dadurch gekennzeichnet, dass** der spitze Winkel (7) in etwa dem Brewsterwinkel entspricht.

## Claims

1. Apparatus consisting of a moving material web (2) with a marking (13) provided thereon and a sensor for capturing the position of the moving material web (2) on the basis of the marking, wherein the sensor (1) has at least one light source (4) transmitting emission light (5) at the material web (2) and at least one light detector (10), which receives detection light (9) which is emitted by the at least one light source (4) and influenced by the material web (2), **characterized in that**, in order to optimize the contrast between the material web (2) and the marking (13), at least one polarization element (15), through which transmission light (16) radiates, is provided between the at least one light source (4) and the at least one light detector (10), wherein the at least one polarization element (15) is arranged spatially between capacitor electrodes (18, 19), which can produce an electric field (22) that influences a polarization of the transmission light (16) by way of applying an electrical voltage, and the at least one light detector (10) is configured as a camera.

2. Apparatus according to Claim 1, **characterized in that** the at least one polarization element (15) has at least one liquid crystal (17).

3. Apparatus according to Claim 1, **characterized in that** the at least one polarization element (15) has at least one Pockels cell (24).

4. Apparatus according to Claim 1, **characterized in that** the at least one polarization element (15) has at least one Kerr cell (25).

5. Apparatus according to at least one of Claims 1 to 4, **characterized in that** at least one polarization filter (6) is provided between the at least one light source (4) and the at least one light detector (10).

6. Apparatus according to at least one of Claims 1 to 5, **characterized in that** the at least one light source (4) is configured such that the emission light (5) is linearly polarized.

7. Apparatus according to at least one of Claims 1 to 6, **characterized in that** the emission light (5) or the transmission light (16) strikes the material web (2) at an acute angle (7) with respect to a normal (8) on the material web.

8. Apparatus according to Claim 7, **characterized in that** the acute angle (7) approximately corresponds to the Brewster angle.

## Revendications

1. Dispositif constitué d'une bande en mouvement (2), comportant un marquage (13) prévu sur celle-ci et un capteur pour détecter la position de la bande en mouvement (2) sur la base du marquage, dans lequel le capteur (1) présente au moins une source de lumière (4) émettant de la lumière d'émission (5) vers la bande (2) et au moins un détecteur de lumière (10) recevant de la lumière de détection (9) qui est émise par l'au moins une source de lumière (4) et est affectée par la bande (2), **caractérisé en ce que**, afin d'optimiser le contraste entre la bande (2) et le marquage (13), il est prévu entre l'au moins une source de lumière (4) et l'au moins un détecteur de lumière (10) au moins un élément polarisant (15) qui est traversé par la lumière de transmission (16), dans lequel l'au moins un élément polarisant (15), est disposé spatialement entre des électrodes de condensateur (18, 19) qui peuvent générer un champ électrique (22) affectant une polarisation de la lumière de transmission (16) par application d'une tension électrique et **en ce que** l'au moins un détecteur de lumière (10) est réalisé sous la forme d'une caméra.

2. Dispositif selon la revendication 1, **caractérisé en ce que** l'au moins un élément polarisant (15) comprend au moins un cristal liquide (17).

3. Dispositif selon la revendication 1, **caractérisé en ce que** l'au moins un élément polarisant (15) comprend au moins une cellule de Pockels (24).

4. Dispositif selon la revendication 1, **caractérisé en ce que** l'au moins un élément polarisant (15) comprend au moins une cellule de Kerr (25).

5. Dispositif selon l'une quelconque des revendications 1 à 4, **caractérisé en ce que**, entre l'au moins une source de lumière (4) et l'au moins un détecteur de lumière (10), il est prévu au moins un filtre polarisant (6).

6. Dispositif selon l'une quelconque des revendications 1 à 5, **caractérisé en ce que** l'au moins une source de lumière (4) est conçue de manière à ce que la lumière d'émission (5) soit polarisée linéairement.

7. Dispositif selon l'une quelconque des revendications 1 à 6, **caractérisé en ce que** la lumière d'émission (5) ou la lumière de transmission (16) est incidente sur la bande (2) sous un angle aigu (7) par rapport à une normale (8) à celle-ci (2).

8. Dispositif selon la revendication 7, **caractérisé en ce que** l'angle aigu (7) correspond approximativement à l'angle de Brewster.
